# EUROPEAN PATENT APPLICATION

(11) **EP 4 704 131 A1**
(43) Date of publication of application: **04.03.2026**
(21) Application number: 24210979.1
(22) Date of filing: 05.11.2024
(51) Int. Cl.: H01H 71/02, H01H 71/08, H02B 1/052, H01H 9/02

(54) **RELAY FOR MOUNTING ON A DIN RAIL**

(30) Priority: 02.09.2024 IN 202441066204
(71) Applicant: Hitachi Energy Ltd, 8050 Zürich (CH)
(72) Inventor: KOTRAIAH, Gurusiddaiah, 562123 Bengaluru (IN); JITHENDRA, Bharath, 560016 Bengaluru (IN); NANJUNDAPPA, Navin, 560060 Bangalore (IN)
(74) Representative: Vossius & Partner Patentanwälte Rechtsanwälte mbB

(57) **Abstract**

The invention relates to a relay (2) for mounting on a DIN rail (4), the relay comprising a base assembly (6) configured to be attached to the DIN rail, and a relay assembly (8) fixedly attached to the base assembly (6). The base assembly (6) comprises an engagement mechanism (10) for mounting the relay on the DIN rail (4), the engagement mechanism comprising a first engagement element (11) for engaging a first section (41) of the DIN rail (4) and a second engagement element (12) for engaging a second section (42) of the DIN rail (4). The first engagement element (11) is movably supported between an extended position and a retracted position, wherein the first engagement element (11) is biased to the extended position.

## Description

### BACKGROUND

The present disclosure relates to a relay for mounting on a DIN rail.

A relay is an electrically operated switch. It may consist of a set of input terminals for a single or multiple control signals, and a set of operating contact terminals. The switch may have any number of contacts in multiple contact forms, such as make contacts, break contacts, or combinations thereof.

A DIN rail is a metal rail of a standard type widely used for mounting circuit breakers and industrial control equipment inside equipment racks. These products are typically made from cold rolled carbon steel sheet with a zinc-plated or chromated bright surface finish. Although metallic, they are meant only for mechanical support and are not used as a busbar to conduct electric current, though they may provide a chassis grounding connection. The term derives from the original specifications published by "Deutsches Institut für Normung" (DIN) in Germany, which have since been adopted as European (EN) and international (IEC) standards.

The applicant is marketing connection and installation components under the name COMBILFLEX^{®}. The COMBILFLEX^{®} mounting system for relay equipment is based on decades of practical experience of assembly complete relay and control systems. The system is based on the 19" rack standard including DIN rails, which permits combination of products using the same international standard. It offers several options of building the relay and control panels. All the details of COMBIFLEX^{®} contribute to well-functioning panel designs.

Usage of these relays requires special adapter elements for mounting the relays on DIN rails and special termination contact pins, sockets, crimping tools, and relay bases. This contributes to costs and effort.

There is a need for an improved relay for mounting on a DIN rail. Particularly, there is a need for a relay for mounting on a DIN rail providing facilitated handling, which is simple to mount on the DIN rail and demount from the DIN rail, which is safe, reliable, cost efficient, and/or which allows improved usability at optimized size. Moreover, there is a need for a system, comprising such a relay and a DIN rail.

### SUMMARY

The present technology is defined by the claims and the aspects discussed herein. In particular, according to the present invention, a relay for mounting on a DIN rail is provided that comprises a base assembly configured to be attached to the DIN rail, and a relay assembly fixedly attached to the base assembly. The base assembly comprises an engagement mechanism for mounting the relay on the DIN rail. The engagement mechanism may comprise a first engagement element for engaging a first section of the DIN rail and a second engagement element for engaging a second section of the DIN rail.

The first engagement element may be movably supported between an extended position and a retracted position. The first engagement element may be biased to the extended position.

The first engagement element may be provided with an abutment surface for abutting against a portion of the DIN rail to allow a movement of the first engagement element from the extended position to the retracted position. This may be achieved by manually moving, preferably by manually moving single handedly, the relay such that the abutment surface pushes against a part of the first section of the DIN rail thereby moving the first engagement element from its extended position to its retracted position. The engagement mechanism may be designed such that when the first engagement element is in its retracted position when engaging the first section of the DIN rail, the second engagement element is free to engage the second section of the DIN rail or to disengage from the second section of the DIN rail.

Particularly, the engagement mechanism may be configured to support the entire mass of the relay. In other words, if mounted on the DIN rail, the engagement mechanism may carry the whole weight of the relay. In this way, the engagement mechanism may allow the relay to be mounted on the DIN rail in a particularly suitable and convenient way without any accessories such as racks or boxes or clamps. In this way, facilitated handling may be enabled.

The design of the engagement mechanism, particularly the design of the first engagement element may allow facilitated handling of the relay since the first engagement element may be moved from its extended position to its retracted position without the need for any tool. The advantageous possibility to mount the relay with a single hand adds to the advantages.

The configuration may be such that the fist engagement member can be moved from its extended position to its retracted position solely by moving the first engagement member relative to the remaining part of the base assembly using the DIN rail, for example the first section of the DIN rail, as a counter bearing or counter abutment.

The first and second sections of the DIN rail may be on opposite sides with regard to a longitudinal axis of the DIN rail.

The DIN rail may be a top hat rail. The DIN rail may be a top hat rail according to the norm IEC/EN 60715.

The DIN rail may be an at least essentially horizontally oriented DIN rail, such that the longitudinal axis of the DIN rail is at least oriented essentially horizontally.

The DIN rail may have a central portion and two side portions, elevated from the central portion seen in a cross-section perpendicular to the DIN rail's elongation or longitudinal axis. The first and second sections of the DIN rail may correspond to these two side portions.

In a mounting scenario in a mounting rack, the first section of the DIN rail may be a downward-facing end section of the DIN rail. The second section of the DIN rail may be an upward-facing end section of the DIN rail.

The engagement mechanism may be configured such that when the first engagement element is in its retracted position when engaging the first section of the DIN rail, the second engagement element is free to engage the second section of the DIN rail or to disengage from the second section of the DIN rail without the need for any tool.

The relay assembly is fixedly attached to the base assembly. In particular, it may be integrally formed with the base assembly. The relay assembly and the base assembly may be connected in such a way that they remain inseparable during the intended use of the relay. For example, the relay assembly and the base assembly may be connected to each other in such a way that they cannot be reversibly separated from each other without the aid of a tool. In particular, it may be provided that the base assembly and the relay assembly cannot simply be connected to and/or disconnected from each other via a plug connection.

The configuration may be such that the relay is in a state mounted on the DIN rail when the first engagement element engages the first section of the DIN rail, and the second engagement element engages the second section of the DIN rail.

The configuration may be such that the relay is in a state demounted from the DIN rail when the first engagement element does not engage the first section of the DIN rail and the second engagement element does not engage the second section of the DIN rail.

The configuration may be such that the relay can be moved from its state mounted on the DIN rail to its state demounted from the DIN rail and vice versa without the need for any tool.

The configuration may be such that when the first engagement element is in its retracted position when engaging the first section of the DIN rail, the relay is pivotable with respect to a rotation axis which is parallel to a longitudinal axis of the DIN rail between a first angular position and a second angular position such that the second engagement element is free to engage the second section of the DIN rail when the relay is in the first angular position and the second engagement element is disengaged from the second section of the DIN rail when the relay is in the second angular position.

The rotation axis may extend through the first section of the DIN rail or extend in the vicinity of the first section of the DIN rail. The rotation axis may be nearer to the first section of the DIN rail than to the second section of the DIN rail.

In this way, the relay may be securely mounted on the DIN rail by simple manual handling movements.

The configuration may be such that the relay in the second angular position is transferred to the state fully demounted from the DIN rail by a first translatory movement perpendicular to the rotation axis, in which the second engagement element (and thus the relay) is moved into a direction of the first section of the DIN rail.

The configuration may be such that the relay in the first angular position is transferred to a state mounted on the DIN rail by a second translatory movement perpendicular to the rotation axis, in which the second engagement element (and thus the relay) is moved into a direction of the first section of the DIN rail.

The first engagement element may be biased to the extended position by a spring element. The spring may be configured and arranged to be effective between the first engagement element and the remaining part of the base assembly.

In this way, a desired bias or preload of the first engagement element may be realized in a simple and reliable way.

The first engagement element may be slidably supported relative to the remaining part of the base assembly.

This may enable a simple yet reliable design of the mechanical guidance for the first engagement member at the remaining part of the base assembly.

The first engagement member may be hook-shaped and/or may have an L-shaped profile providing an undercut for receiving a part, particularly the first section of the DIN rail.

The second engagement member may be hook-shaped and/or may have an L-shaped profile providing an undercut for receiving a part, particularly the second section of the DIN rail.

The first and second engagement elements may be facing each other, so as to connect to opposite sides of the DIN rail.

The base assembly may comprise screw terminals for electrically connecting the relay to external electrical conductors, wherein the screw terminals are configured such that they are accessible by a screwdriver from a side of the base assembly opposite the engagement mechanism.

The screw terminals may allow a desired electrical connection to be made in a user-friendly way using only a screwdriver.

The base assembly may have a rear side and a front side, whereby the engagement mechanism is formed on the rear side and the screw terminals are accessible by the screwdriver from the front side.

The rear side of the base assembly may comprise a rear surface section which extends in a plane such that both the first section and the second section of the DIN rail abut the rear surface section when the relay is in its state mounted on the DIN rail.

This may allow a reliable support of the relay on the DIN rail when the relay is in its state mounted on the DIN rail.

The relay may comprise a main axis extending perpendicular to the rear surface section.

At least some, preferably all of the screw terminals may be positioned outside the footprint of the relay assembly. The footprint may be defined as the area of the relay assembly in a projection along the main axis of the relay, i. e., essentially the area of the relay assembly when seen from the front - in a direction of the main axis of the relay. This may enable particularly suitable accessibility to the screw terminals.

A first subset of the screw terminals may be positioned on a first side of the relay assembly and a second subset of the screw terminals may be positioned on a second side opposite the first side of the relay assembly. The first subset of the screw terminals may be positioned above the relay assembly when the relay is in its state mounted on the DIN rail. The second subset of the screw terminals may be positioned below the relay assembly when the relay is in its state mounted on a horizontally extending DIN rail. In particular, it may be provided that there is no screw terminal - and no other part of the relay - on a lateral side of the relay assembly. This may allow several relays to be mounted horizontally next to each other in a particularly space-saving manner.

A first subset of the screw terminals on each side of the relay assembly may be positioned on a first level seen along the main axis of the relay, and a second subset of the screw terminals on each side of the relay assembly may be positioned on a second level seen along the main axis of the relay. In particular, one of these first and second subsets is closer to the rear of the relay than the other one, preferably the respective outer one of the first and second subsets.

Each of the screw terminals may be configured to be connected to at least one cable lug of an external electrical conductor. Each of the screw terminals may be configured to be connected to two cable lugs, for example to a maximum of two cable lugs.

This configuration of the screw terminals may allow to achieve a reliable termination of each connection from a panel wiring with simple use of generic market standard cable lugs.

The cable lugs may comprise three different types of cable lugs, for example round cable lugs, fork cable lugs and locking cable lugs.

The screw terminals may be configured to accommodate conductors, preferably two conductors, for example up to locking 2.5 mm² cross-sectional area, crimped with market standard round or fork type cable lugs.

The base assembly may comprise a first base assembly element and a second base assembly element. The second base assembly element may be fixedly attached to the first base assembly element. The first base assembly element and the second base assembly element may be connected in such a way that they remain inseparable during the intended use of the relay. For example, the first and second base assembly elements may be connected to each other in such a way that they cannot be reversibly separated from each other without the aid of a tool. The first base assembly element and the second base assembly element may be integrally formed.

The first base assembly element may comprise the engagement mechanism and the second base assembly element may be fixedly connected to the relay assembly.

Each screw terminal may comprise a conductive pin element which extends through an opening formed in the second base assembly element into a cavity formed by the first base assembly element or by the first and the second base assembly element. The conductive pin element may comprise or consist of a bent sheet metal strip.

The relay assembly may comprise relay contacts which are electrically connected to the conductive pin elements via flexible conductors.

The flexible conductors may extend through at least one opening formed in the second base assembly element.

The flexible conductors may be soldered to the relay contacts and to the conductive pin elements.

The relay may further comprise at least one terminal insulating element for electrical insulation between at least two of the screw terminals.

The at least one terminal insulating element may be fixedly attached to the second base assembly element.

The relay assembly may comprise a housing, with the housing being fixedly attached to the second base assembly element. The housing may be made of a transparent material.

The at least one terminal insulating element may be fixed to the second base assembly element adjacent to the housing.

The at least one terminal insulating element may comprise at least one shrouding member for shrouding at least one of the screw terminals. The at least one shrouding member may be configured to shroud the entirety of the screw terminals or a subset of the screw terminals. Each terminal insulating element may comprise at least one shrouding member for shrouding the entirety of the screw terminals of the respective terminal insulating element. The at least one shrouding member may in particular protect a user of the relay from an electric shock.

The at least one shrouding member may be mounted movable, preferably pivotably between a shrouding position and an open position on the at least one terminal insulating element. The configuration may be such that the at least one shrouding member may be locked relative to the respective terminal insulating member. This might allow the shrouding member not to have to be removed from the remaining part of the respective terminal insulating element when preparing a respective connection.

The shrouding member may be made from a transparent plastic material. This may improve visibility of the screw terminals.

The shrouding member may comprise markings for individually marking the screw terminals. In particular, these markings may reduce the risk of making an unintended electrical connection.

Respective markings may also be provided on the base assembly.

The base assembly and the relay assembly may be configured to protect the relay against dust and liquid, such as for example as defined by ingression rating IP40.

According to a further aspect of the invention, a relay system is provided which comprises a relay as described herein, and at least one DIN rail, wherein the relay is mounted on the at least one DIN rail as intended.

In particular, the present disclosure comprises the following aspects:
1. Relay (2) for mounting on a DIN rail (4), comprising
   a base assembly (6) configured to be attached to the DIN rail, and
   a relay assembly (8) fixedly attached to the base assembly (6),
   wherein the base assembly (6) comprises an engagement mechanism (10) for mounting the relay on the DIN rail (4), the engagement mechanism comprising a first engagement element (11) for engaging a first section (41) of the DIN rail (4) and a second engagement element (12) for engaging a second section (42) of the DIN rail (4),
   wherein, preferably, the first engagement element (11) is movably supported between an extended position and a retracted position, wherein the first engagement element (11) is biased to the extended position.
2. The relay of aspect 1,
   wherein the first engagement element (11) is provided with an abutment surface (13), for abutting against a portion of the DIN rail (4) to allow a movement of the first engagement element (11) from the extended position to the retracted position by manually moving the relay (2) such that the abutment surface (13) pushes against a part of the first section (41) of the DIN rail (4) thereby moving the first engagement element (11) from its extended position to its retracted position, and
   wherein the engagement mechanism (10) is designed such that when the first engagement element (11) is in its retracted position when engaging the first section (41) of the DIN rail (4), the second engagement element (12) is free to engage the second section (42) of the DIN rail (4) or to disengage from the second section (42) of the DIN rail (4).
3. The relay of any of aspects 1 to 2, wherein the first and second sections (41, 42) of the DIN rail (4) are on opposite sides with regard to a longitudinal axis (L) of the DIN rail (4).
4. The relay of any of aspects 1 to 3, wherein the configuration is such that when the first engagement element (11) is in its retracted position when engaging the first section (41) of the DIN rail (4), the relay (2) is pivotable with respect to a rotation axis (R) which is parallel to a longitudinal axis (L) of the DIN rail (4) between a first angular position and a second angular position such that the second engagement element (12) is free to engage the second section (42) of the DIN rail (4) when the relay (2) is in the first angular position and the second engagement element (12) is disengaged from the second section (42) of the DIN rail (4) when the relay (2) is in the second angular position.
5. The relay of any of aspects 1 to 4 wherein the base assembly (6) comprises screw terminals (62) for electrically connecting the relay (2) to external electrical conductors (20), wherein the screw terminals are configured such that they are accessible by a screwdriver (50) from a side of the base assembly (6) opposite the engagement mechanism (10).
6. The relay of aspect 5, wherein at least some of the screw terminals (62) are positioned outside the footprint of the relay assembly (8).
7. The relay of any of aspects 5 to 6, wherein a first subset of the screw terminals (621) is positioned on a first side of the relay assembly (8) and a second subset of the screw terminals (622) is positioned on a second side opposite the first side of the relay assembly (8).
8. The relay of any of aspects 5 to 7, wherein each of the screw terminals (62) is configured to be connected to at least one cable lug (22) of an external electrical conductor (20), preferably wherein each of the screw terminals (62) is configured to be connected to a maximum of two cable lugs.
9. The relay of any of the preceding aspects, wherein the base assembly (6) comprises a first base assembly element (65) and a second base assembly element (66), the second base assembly element (66) being fixedly attached to the first base assembly element (65), wherein the first base assembly element (65) comprises the holding mechanism (10) and the second base assembly element (65) is fixedly connected to the relay assembly (8).
10. The relay of any of the preceding aspects, comprising the features of aspects 5 and 9, wherein each screw terminal (62) comprises a conductive pin element (30) which extends through an opening formed in the second base assembly element (66) into a cavity (68) formed by the first base assembly element (65) or formed by the first and the second base assembly element (65, 66).
11. The relay of aspect 10, wherein the relay assembly (8) comprises relay contacts (34) which are electrically connected to the conductive pin elements (30) via flexible conductors (32).
12. The relay of aspect 11, wherein the flexible conductors (32) extend through at least one opening formed in the second base assembly element (66).
13. The relay of any of aspects 11 to 12, wherein the flexible conductors (32) are soldered to the relay contacts (34) and to the conductive pin elements (30).
14. The relay of any of the preceding aspects, comprising the features of aspect 5, further comprising
   at least one terminal insulating element (67) for electrical insulation between at least two of the screw terminals (62).
15. The relay of aspect 14, wherein the at least one terminal insulating element (67) is fixed to the second base assembly element (66).
16. The relay of any of the preceding aspects, comprising the features of aspect 9, wherein the relay assembly (8) comprises a housing (82), with the housing being fixed to the second base assembly element (66).
17. The relay of any of the preceding aspects, comprising the features of aspects 14 and 16, wherein the at least one terminal insulating element (67) is fixed to the second base assembly element (66) adjacent to the housing (82).
18. The relay of any of the preceding aspects, of any one of the preceding aspects and comprising the features of aspect 13, wherein the at least one terminal insulating element (67) comprises at least one shrouding member (5) for shrouding at least one of the screw terminals (62), preferably for shrouding each of the screw terminals (62).
19. The relay of aspect 18, wherein the at least one shrouding member (5) is mounted movable, preferably pivotably between a shrouding position and an open position on the at least one terminal insulating element (67).
20. The relay of any of aspects 18 to 19, wherein the at least one shrouding member (5) is made from a transparent plastic material.
21. The relay of any of the preceding aspects, comprising the features of aspects 5 and 18, wherein the at least one shrouding member (5) comprises markings for individually marking the screw terminals (62).
22. The relay of any of the preceding aspects, wherein the base assembly (6) and the relay assembly (8) are configured to protect the relay (2) as defined by ingression rating IP40.
23. Relay system, comprising
   a relay (2) according to any of aspects 1 to 21, and
   at least one DIN rail (4), wherein the relay (2) is mounted on the at least one DIN rail (4) as intended.

### SHORT DESCRIPTION OF THE DRAWINGS

The subject-matter of the disclosure will be explained in more detail with reference to preferred exemplary embodiments which are illustrated in the attached drawings.
Fig. 1 is a perspective view of a relay according to the present technology.
Fig. 2 is a side view of the relay mounted on a DIN rail.
Fig. 3 is a perspective view of the relay of fig. 2.
Fig. 4 is a rear view of the relay showing an engagement mechanism for mounting the relay on the DIN rail.
Fig. 5 is a perspective, partially broken away view of the relay and the DIN rail, showing a spring loaded first engagement element of the engagement mechanism.
Figures 6a to 6d show different mounting step positions of the relay relative to the DIN rail.
Fig. 7a shows a perspective cross-sectional view of the relay.
Fig. 7b shows a detail of Fig. 7a.
Figures 8a and 8b show three different kinds of relays, having different sizes.

### DETAILED DESCRIPTION

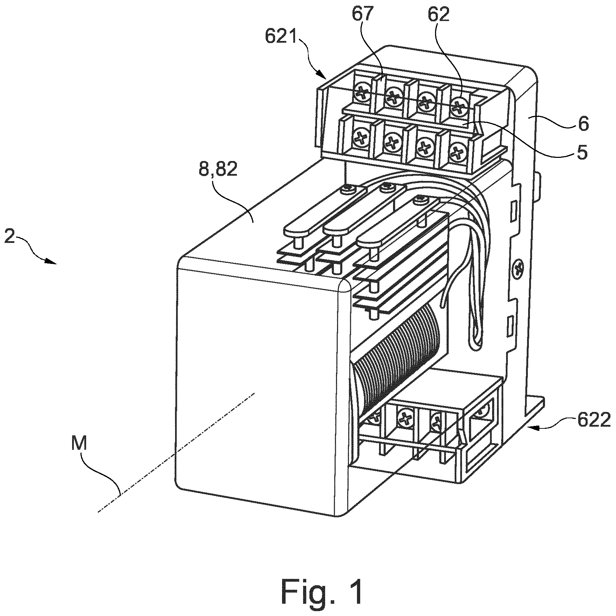

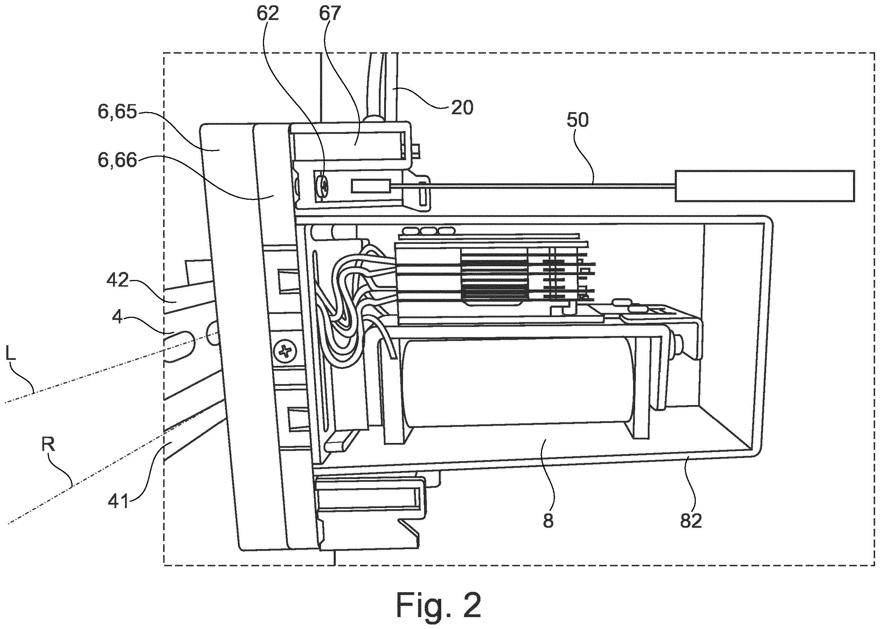

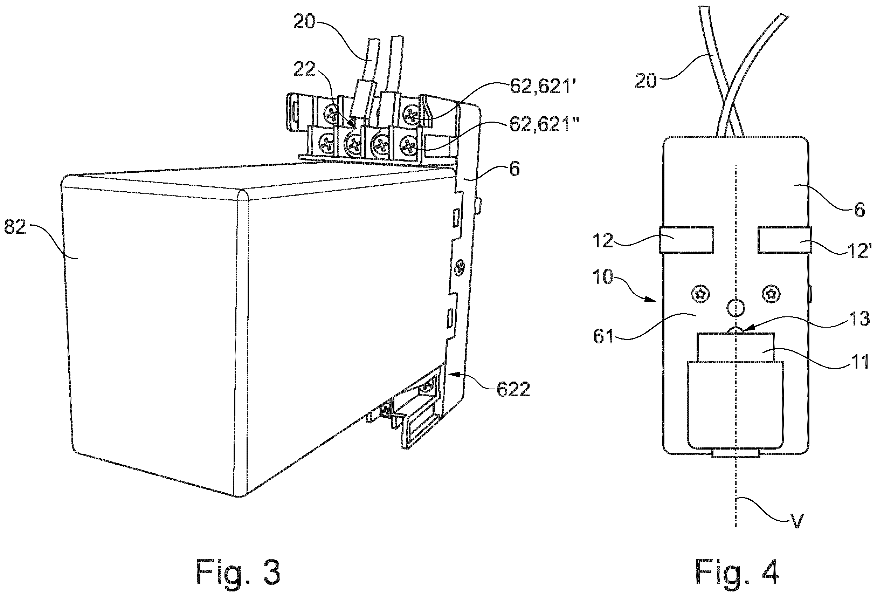

Fig. 1 is perspective view of a relay 2 according to the present description. Figures 2 and 3 show the relay 2 mounted on a DIN rail 4 from two different perspectives. The relay 2 is configured to be mounted on the DIN rail 4. The DIN rail 4 may generally be a top hat rail.

The DIN rail 4 may be oriented such that a longitudinal axis L (fig. 2) thereof is oriented horizontally. The DIN rail 4 may be fixedly attached to a vertical wall section of a support component. A horizontal orientation of the DIN rail 4 is assumed here merely for the sake of simpler description. It should be noted that in principle the DIN rail 4 may also be oriented in such a way that its longitudinal axis deviates from the horizontal.

The relay 2 comprises a base assembly 6 which is configured to be attached to the DIN rail 4 for mounting the relay 2 on the DIN rail 4, and a relay assembly 8 fixedly attached to the base assembly 6. The relay assembly 8 may comprise electrical switching contact elements. The relay assembly 8 may be in the form of a "mechanics" assembly, including mechanically movable electrical switching contact elements.

A rear side of the relay 2 is formed by the base assembly, a front side of the relay 2 is formed by the relay assembly 8.

Fig. 4 is a rear view of the relay 2, i. e., a view of the base assembly 6 from a side opposite the relay assembly 8. The base assembly 6 comprises an engagement mechanism 10 for mounting the relay 2 on the DIN rail 4. The engagement mechanism 10 may comprise a first engagement element 11 for engaging a first section 41 (see fig. 2) of the DIN rail 4. The first section 41 may be a lower end section of the DIN rail 4. Analogously, the engagement mechanism 10 may comprise a second engagement element 12 for engaging a second section 42 of the DIN rail 4. The second section 42 may be an upper end section of the DIN rail 4. The second engagement element 12 may be formed by two individual parts 12, 12' as exemplarily sketched in fig. 4. The two parts 12, 12' are preferably formed on two sides relative to an axis v extending perpendicular to the longitudinal axis L of the relay 2, i. e. for example vertically, and through a center of the first engagement element 11.

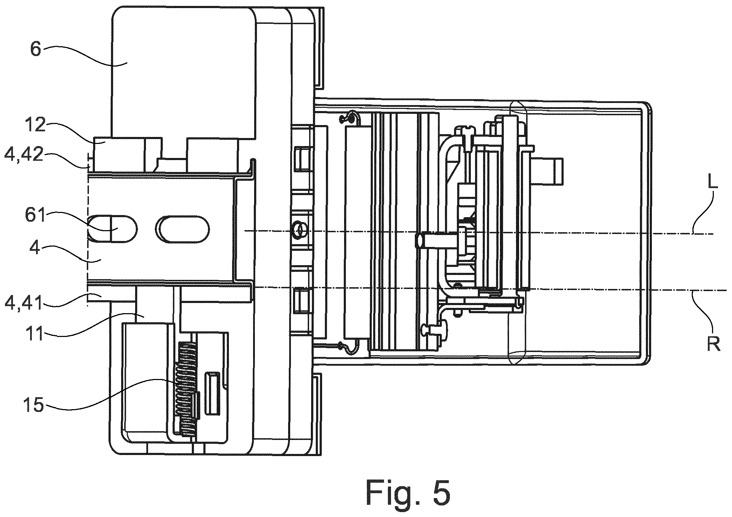

Fig. 5 is a perspective, partially broken away view of the relay 2 and the DIN rail 4. The first engagement element 11 is movably supported on the remaining part of the base assembly 6 such that it is movable between an extended position - a shown in fig. 5 - and a retracted position. The first engagement element 11 is biased to the extended position, for example via a spring element 15.

The second engagement element 12 may be formed immovable in relation to the remaining part of the base portion 6.

Both engagement elements 11, 12 are formed hook- or L-shaped as seen in cross-sections normal to the longitudinal axis L of the DIN rail 4 for engaging the first and second section 41, 42 of the DIN rail 4, respectively.

The relay 2 is in a state mounted on the DIN rail 4 when the first engagement element 11 engages the first section 41 of the DIN rail 4, and the second engagement element 12 engages the second section 42 of the DIN rail 4. Correspondingly, the relay 2 is in a state demounted from the DIN rail 4 when the first engagement element 11 does not engage the first section 41 of the DIN rail 4 and the second engagement element 12 does not engage the second section 42 of the DIN rail 4.

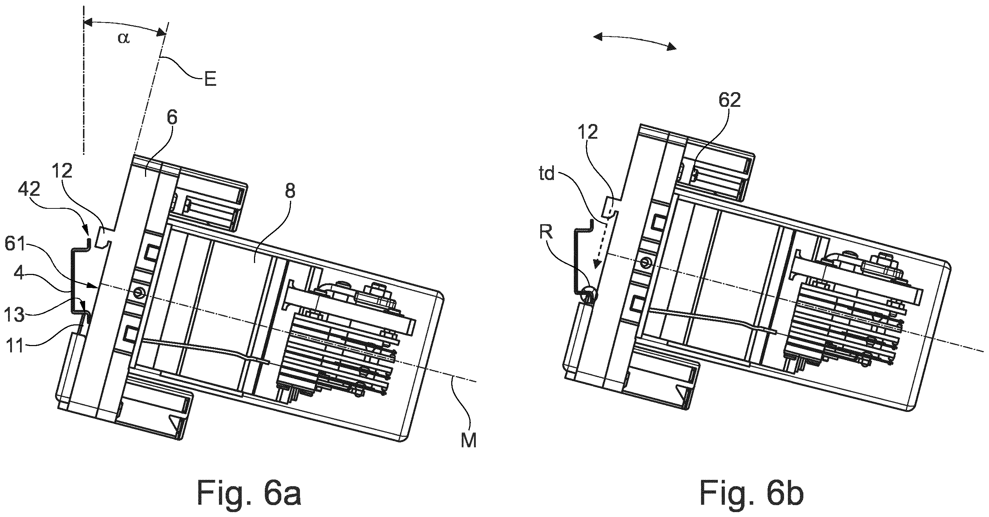

Figures 6a to 6d show four positions of the relay 2 relative to the DIN rail 4 that may be taken one after the other during a process of mounting the relay 2 on the DIN rail 4.

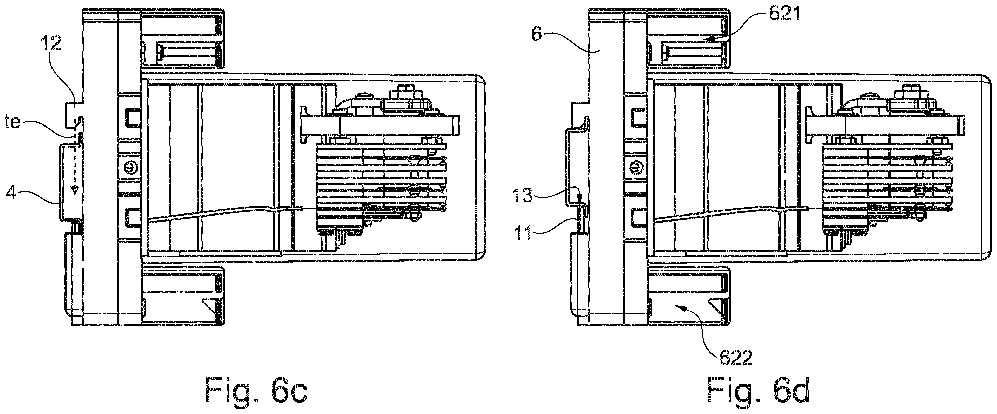

The rear side of the base assembly 6 comprises a rear surface section 61 (figures 4, 5, 6a) which extends in a plane E (fig. 6a) such that both the first section 41 and the second section 42 of the DIN rail 4 abuts the rear surface section 61 when the relay 2 is in its state mounted on the DIN rail 4 (fig. 6d).

The relay 2 defines a main axis M (fig. 1) oriented normal to the plane of the rear surface section 61 and extending through the base assembly 6 and a center of the relay assembly 8.

Fig. 6a shows a first mounting step position in which the first engagement element 11 is brought into contact with the first section 41 of the DIN rail 4 such that the first engagement element 11 engages the first section 41 of the DIN rail 4, for example at a position between the first section 41 of the DIN rail 4 and the support component - where provided.

The first engagement element 11 is provided with an abutment surface 13 (figures 4, 6a) for abutting against a portion of the DIN rail 4, for example against its first section 41, to allow a movement of the first engagement element 11 from its extended position to its retracted position by manually moving the relay 2 such that the abutment surface 13 pushes against a part of the first section 41 of the DIN rail 4 thereby moving the first engagement element 11 from its extended position to its retracted position.

When in the first mounting step position, the plane E of the rear surface section 61 is tilted relative to the vertical by an angle α which may be, for example, between 5° and 40°. Consequently, the orientation of the main axis M of the relay 2 is tilted relative to the horizontal by the same angle α.

Fig. 6b shows the relay 2 in a second mounting step position in which the first engagement element 11 is pushed against the first section 41 of the DIN rail 4 such that it is now in its retracted position. The relay 2 is still tilted as in the first mounting step position. The second mounting step position allows a rotation of the relay 2 relative to the DIN rail 4 around a rotation axis R (figures 5, 6b) - as sketched by a double-headed arrow - whereby the first engagement element 11 remains in its retracted position and in continuous engagement with the first section 41 of the DIN rail 4. The configuration of the engagement mechanism 10, particularly the distance between the first engagement element 11 and the second engagement element 12 is such that the second engagement element 12 may pass the second section 42 of the DIN rail 4 during said rotation around the rotation axis R.

Fig. 6c shows the relay 2 in a third mounting step position in which the relay 2 is rotated such that the second engagement element 12 has passed the second section 42 of the DIN rail 4. The second section 42 of the DIN rail 4 may be in contact with the rear surface section 61 of the base element 6. The plane E of the rear surface section 61 may be oriented vertically, and the main axis M of the relay 2 may be oriented horizontally. When in the third mounting step position, the relay 2 may be moved translationally such that the second engagement element 12 is moved in a direction te of the first section 41 of the DIN rail 4 until the second engagement element 12 engages the second section 42 of the DIN rail 4.

During this translational movement, the first engagement element 11 moves automatically from its retracted position into its extended position due to is bias.

Fig. 6d shows the relay 2 in a fourth mounting step position in which said translational movement is stopped by an interaction between the second engagement element 12 and the second section 42 of the DIN rail 4. In the fourth mounting step position, the relay 2 is in a state mounted on the DIN rail 4 since the first engagement element 11 engages the first section 41 of the DIN rail 4, and the second engagement element 12 engages the second section 42 of the DIN rail 4. It is noted that the engagement mechanism 10, particularly the first engagement element 11 is configured such that the first engagement element 11 engages the first section 41 of the DIN rail 4 in the fourth mounting step position.

A demounting process may be carried out in reverse order: Starting from the state mounted on the DIN rail 4 (fig. 6d), the relay 2 may be manually lifted to bring the first engagement element 11 in its retracted position (fig. 6c). Subsequently, the relay 2 may be tilted via a rotation around the rotation axis R by the angle α (fig. 6b). In a next step, the relay 2 may be moved translationally such that the second engagement element 12 is moved in a direction td of the first section 41 of the DIN rail 4 so that the second engagement element 14 passes in front of the second section 42 of the DIN rail 4 until the first engagement element 11 has reached its extended position (fig. 6a). By continuing this translatory movement, the relay 2 reaches its state demounted from the DIN rail 4.

Accordingly, when the first engagement element 11 is in its retracted position while engaging the first section 41 of the DIN rail 4 (figures 6b and 6c), the relay 2 is pivotable with respect to a rotation axis R which is parallel to a longitudinal axis L of the DIN rail 4 as sketched by the double-headed arrow in fig. 6b. In particular, the relay 2 may be rotated or tilted between a first angular position (fig. c) and a second angular position (fig. 6b) such that the second engagement element 12 is free to engage the second section 42 of the DIN rail 4 when the relay 2 is in the first angular position (fig. 6c) - for example solely via a translational movement in the direction te - and the second engagement element 12 is disengaged from the second section 42 of the DIN rail 4 when the relay 2 is in the second angular position (fig. 6b) - for example solely via a translational movement in the direction td.

Thus, figures 6b and 6c show a situation in which the first engagement element 11 is in its retracted position, engaging the first section 41 of the DIN rail 4. In this situation, the second engagement element 12 is free to engage the second section 42 of the DIN rail 4, as exemplarily illustrated in fig. 6c, and also free to disengage from the second section 42 of the DIN rail 4, as exemplarily illustrated in fig. 6b.

The base assembly 6 comprises screw terminals 62 for electrically connecting the relay 2 to external electrical conductors 20 (figures 2, 3, 4). The screw terminals 62 are configured such that they are accessible by a screwdriver 50 (fig. 2) from a side of the base assembly 6 opposite the engagement mechanism 10, i. e. from the front side of the relay 2, as roughly sketched in fig. 2. The screw terminals 62 may be formed such that their thread axes extend at least essentially parallel to the main axis M of the relay 2. Accordingly, the relay assembly 8 is shaped in such a way that the screwdriver 50 for operating the screw terminals 62 may be guided past the relay assembly 8 from the front.

At least some of the screw terminals are positioned outside the footprint of the relay assembly 8. The footprint may be defined as the area of the relay assembly 8 in a projection along the main axis M of the relay 2.

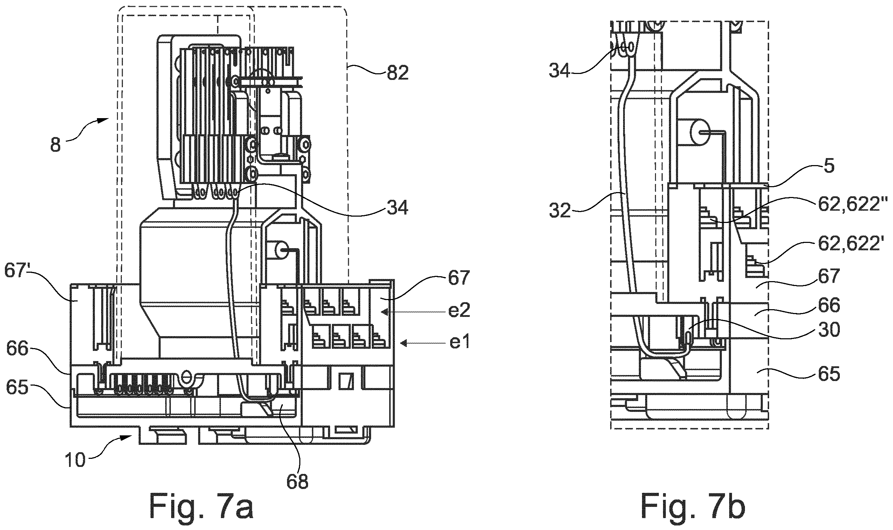

A first subset of the screw terminals 621 (figures 1, 6d) is positioned on a first side of the relay assembly 8, here above the relay assembly 8, and a second subset of the screw terminals 622 is positioned on a second side opposite the first side of the relay assembly 8, here below the relay assembly 8. Each subset of screw terminals 621, 622 may comprise a first sub-subset or portion 621', 622' (figures 3, 7b) positioned on a first level e1 (fig. 7a) seen along the main axis M of the relay 2 and a second sub-subset or portion 621", 622" on a second level e2 seen along the main axis M of the relay 2. The first level e1 may be closer to the rear of the relay 2 than the second level e2. Preferably, the second sub-subset 621", 622", i. e. the sub-subset positioned on the second level e2, is arranged closer to the relay assembly 8 than the first sub-subset 621', 622', respectively.

Each screw terminal 62 is configured to be connected to at least one cable lug 22 (fig. 3) of an external electrical conductor 20. For example, each of the screw terminals 62 may be configured to be connected to a maximum of two cable lugs.

Fig. 7a shows a perspective cross-sectional view of the relay, fig. 7b shows a detail of Fig. 7a. The base assembly 6 comprises a first base assembly element 65 and a second base assembly element 66. The first base assembly element 65 comprises the engagement mechanism 10 and the second base assembly element 65 is fixedly connected to the relay assembly 8. The second base assembly element 66 is fixedly attached or irreversibly connected to the first base assembly element 65. The configuration of the base assembly 6 is such that the first base assembly element 65 and the second base assembly element 66 form a cavity 68.

Each screw terminal 62 comprises a conductive pin element 30 (fig. 7b) which extends through an opening formed in the second base assembly element 66 into the cavity 68.

The relay assembly 8 comprises relay contacts 34, for example formed by mechanically movable electrical switching contact elements, which are electrically connected to the conductive pin elements 30 via flexible conductors 32. (Only one flexible conductor 32 is shown in figures 7a and 7b for the sake of better recognizability.) The flexible conductors 32 extend through at least one opening, for example in the form of a hole or a slot, formed in the second base assembly element 66. Each flexible conductors 32 is preferably soldered with one end to a relay contact 34 and with the other end to a conductive pin element 30.

The relay further comprises at least one terminal insulating element 67 for electrical insulation between at least two of the screw terminals 62. The at least one terminal insulating element 67 is fixed to the second base assembly element 66. For example, two terminal insulating elements 67, 67' (fig. 7a) may be provided, which are arranged on two opposite sides of the relay assembly 8.

The relay assembly 8 comprises a housing 82 which is fixed to the second base assembly element 66. Preferably, the housing is transparent to enable parts of the relay assembly 8 inside the housing 82 to be recognized by an observer or user outside the housing 82. The housing 82 may be irreversible connected to the second base assembly element 66.

The at least one terminal insulating element 67 is preferably fixedly attached to the second base assembly element 66 adjacent to the housing 82.

Further, the at least one terminal insulating element 67 preferably comprises at least one shrouding member 5 (fig. 1, 7b) for shrouding at least one of the screw terminals 62, preferably for shrouding the entirety of the screw terminals 62.

The at least one shrouding member 5 is mounted movable, preferably pivotably between a shrouding position and an open position on the at least one terminal insulating element 67. Preferably, the at least one shrouding member 5 is made from a transparent plastic material.

The at least one shrouding member 5 may comprise markings for individually marking the screw terminals 62.

Preferably, the base assembly 6 and the relay assembly 8 are configured to protect the relay 2 as defined by ingression rating IP40.

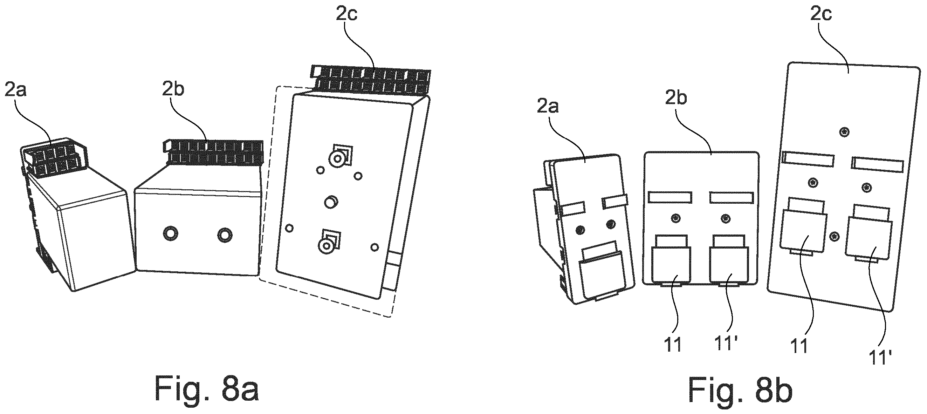

Figures 8a and 8b show three different relays according to the present description which differ in their sizes. Specifically, a one-seat relay 2a, a two-seat relay 2b, and a four-seat relay 2c are exemplarily shown from left to right in figures 8a and 8b. As can be seen in fig. 8b, the two-seat relay 2b and the four-seat relay 2c may comprise a first engagement element having two parts 11, 11' for providing adequate holding force.

## Claims

1. Relay (2) for mounting on a DIN rail (4), comprising
a base assembly (6) configured to be attached to the DIN rail, and
a relay assembly (8) fixedly attached to the base assembly (6),
wherein the base assembly (6) comprises an engagement mechanism (10) for mounting the relay on the DIN rail (4), the engagement mechanism comprising a first engagement element (11) for engaging a first section (41) of the DIN rail (4) and a second engagement element (12) for engaging a second section (42) of the DIN rail (4),
wherein the first engagement element (11) is movably supported between an extended position and a retracted position, wherein the first engagement element (11) is biased to the extended position,
wherein the first engagement element (11) is provided with an abutment surface (13), for abutting against a portion of the DIN rail (4) to allow a movement of the first engagement element (11) from the extended position to the retracted position by manually moving the relay (2) such that the abutment surface (13) pushes against a part of the first section (41) of the DIN rail (4) thereby moving the first engagement element (11) from its extended position to its retracted position, and
wherein the engagement mechanism (10) is designed such that when the first engagement element (11) is in its retracted position when engaging the first section (41) of the DIN rail (4), the second engagement element (12) is free to engage the second section (42) of the DIN rail (4) or to disengage from the second section (42) of the DIN rail (4).

2. The relay of claim 1, wherein the configuration is such that when the first engagement element (11) is in its retracted position when engaging the first section (41) of the DIN rail (4), the relay (2) is pivotable with respect to a rotation axis (R) which is parallel to a longitudinal axis (L) of the DIN rail (4) between a first angular position and a second angular position such that the second engagement element (12) is free to engage the second section (42) of the DIN rail (4) when the relay (2) is in the first angular position and the second engagement element (12) is disengaged from the second section (42) of the DIN rail (4) when the relay (2) is in the second angular position.

3. The relay of any of the preceding claims, wherein the base assembly (6) comprises screw terminals (62) for electrically connecting the relay (2) to external electrical conductors (20), wherein the screw terminals are configured such that they are accessible by a screwdriver from a side of the base assembly (6) opposite the engagement mechanism (10).

4. The relay of claim 3, wherein a first subset of the screw terminals (621) is positioned on a first side of the relay assembly (8) and a second subset of the screw terminals (622) is positioned on a second side opposite the first side of the relay assembly (8).

5. The relay of any of claims 3 to 4, wherein each of the screw terminals (62) is configured to be connected to at least one cable lug (22) of an external electrical conductor (20), preferably wherein each of the screw terminals (62) is configured to be connected to two cable lugs.

6. The relay of any of the preceding claims, wherein the base assembly (6) comprises a first base assembly element (65) and a second base assembly element (66), the second base assembly element (66) being fixedly attached to the first base assembly element (65), wherein the first base assembly element (65) comprises the holding mechanism (10) and the second base assembly element (65) is fixedly connected to the relay assembly (8).

7. The relay of any of the preceding claims, comprising the features of claims 3 and 6, wherein each screw terminal (62) comprises a conductive pin element (30) which extends through an opening formed in the second base assembly element (66) into a cavity (68) formed by the first base assembly element (65) or by the first and the second base assembly element (65, 66).

8. The relay of claim 7, wherein the relay assembly (8) comprises relay contacts (34) which are electrically connected to the conductive pin elements (30) via flexible conductors (32).

9. The relay of claim 8, wherein the flexible conductors (32) extend through at least one opening formed in the second base assembly element (66), preferably, wherein the flexible conductors (32) are soldered to the relay contacts (34) and to the conductive pin elements (30).

10. The relay of any of the preceding claims, comprising the features of claim 3, further comprising
at least one terminal insulating element (67) for electrical insulation between at least two of the screw terminals (62).

11. The relay of claim 10, wherein the at least one terminal insulating element (67) is fixedly attached to the second base assembly element (66).

12. The relay of any of the preceding claims, comprising the features of claim 6, wherein the relay assembly (8) comprises a housing (82), with the housing being fixedly attached to the second base assembly element (66).

13. The relay of any of the preceding claims, comprising the features of claims 3 and 10, wherein the at least one terminal insulating element (67) comprises at least one shrouding member (5) for shrouding at least one of the screw terminals (62), preferably wherein the at least one shrouding member (5) is mounted movable, preferably pivotably between a shrouding position and an open position on the at least one terminal insulating element (67).

14. The relay of claim 13, wherein the at least one shrouding member (5) is made from a transparent plastic material, and/or wherein the at least one shrouding member (5) comprises markings for individually marking the screw terminals (62).

15. Relay system, comprising
a relay (2) according to any of claims 1 to 14, and
at least one DIN rail (4), wherein the relay (2) is mounted on the at least one DIN rail (4) as intended.
